# EUROPEAN PATENT SPECIFICATION

(11) **EP 4 027 756 B1**
(45) Date of publication and mention of the grant of the patent: **27.09.2023**
(21) Application number: 22150545.6
(22) Date of filing: 07.01.2022
(51) Int. Cl.: H05B 6/06

(54) **INDUCTION HEATING APPARATUS AND METHOD FOR CONTROLLING THE SAME**
INDUKTIONSWÄRMEGERÄT UND VORRICHTUNG ZUR STEUERUNG DAVON
APPAREIL DE CHAUFFAGE PAR INDUCTION ET SON PROCÉDÉ DE COMMANDE

(30) Priority: 07.01.2021 KR 20210002155
(43) Date of publication of application: 13.07.2022
(73) Proprietor: LG Electronics Inc., SEOUL 07336 (KR)
(72) Inventor: JEONG, Sihoon, 08592 Seoul (KR); YOON, Bada, 08592 Seoul (KR); PARK, Wongyu, 08592 Seoul (KR)
(74) Representative: Ter Meer Steinmeister & Partner

(56) References cited:
- EP-A1- 2 618 633
- EP-A2- 1 635 614
- WO-A1-2020/046052
- US-B2- 10 136 476

## Description

### TECHNICAL FIELD

Disclosed herein are an induction heating apparatus and a method for controlling the same.

### BACKGROUND

Induction heating apparatuses are devices that generate eddy current in a metallic container and heat the container, using a magnetic field generated around a working coil. When an induction heating apparatus is driven, high-frequency current is supplied to the working coil. Then, an induced magnetic field is generated around the working coil disposed in the induction heating apparatus. When magnetic line of force of the induced magnetic field generated passes through a bottom of the metallic container over the working coil, eddy current is generated inside the bottom of the container. Accordingly, the eddy current generated flows in the container, and the container itself is heated.

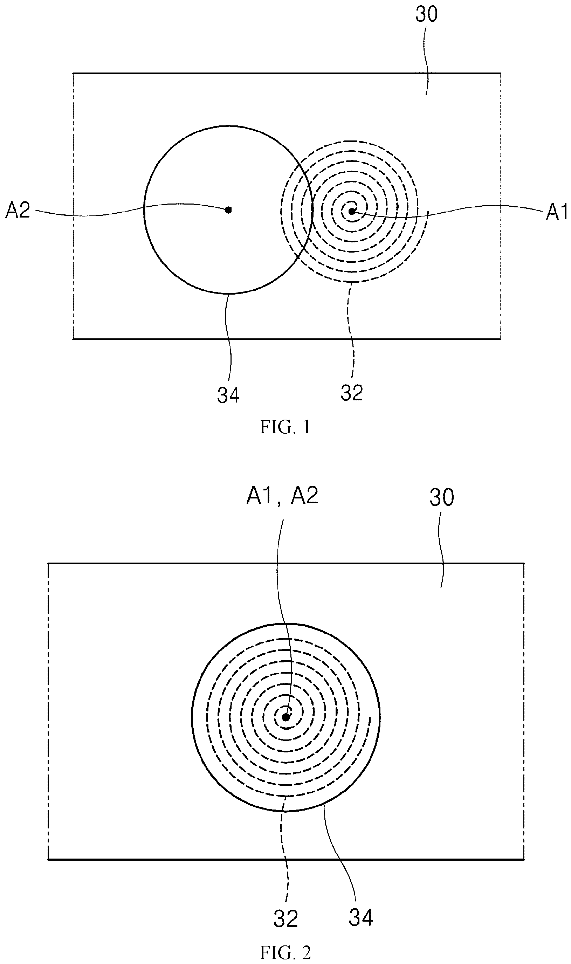

FIG. 1 is a view showing a state in which a container is abnormally placed in a heating zone formed on an upper plate of an induction heating apparatus, and FIG. 2 is a view showing a state in which a container is normally placed in a heating zone formed on an upper plate of an induction heating apparatus.

The induction heating apparatus includes a heating zone in which a container is placed. For example, the heating zone is formed on an upper plate 30 of the induction heating apparatus, and the heating zone corresponds to a working coil 32, as illustrated in FIGS. 1 and 2. That is, the heating zone is formed in a zone corresponding to a position of the working coil 32.

When a user places the container 34 on the upper plate 30, sets a power level of the heating zone, and then inputs an instruction to initiate heating, the working coil 32 operates, to heat the container.

When the container 34 is placed on the upper plate 30, heating performance of the working coil 32 may vary depending on a distance between a center point A1 of the working coil 32 and a center point A2 of the container 34. For example, when the container 34 is heated, as the center point A1 of the working coil 32 becomes farther from the center point A2 of the container 34 as illustrated in FIG. 1, the heating performance of the working coil 32 deteriorates. Thus, it takes a long time to heat the container 34. When the center point A1 of the working coil 32 is spaced from the center point A2 of the container 34 as illustrated in FIG. 1, the container is in a state of being eccentric.

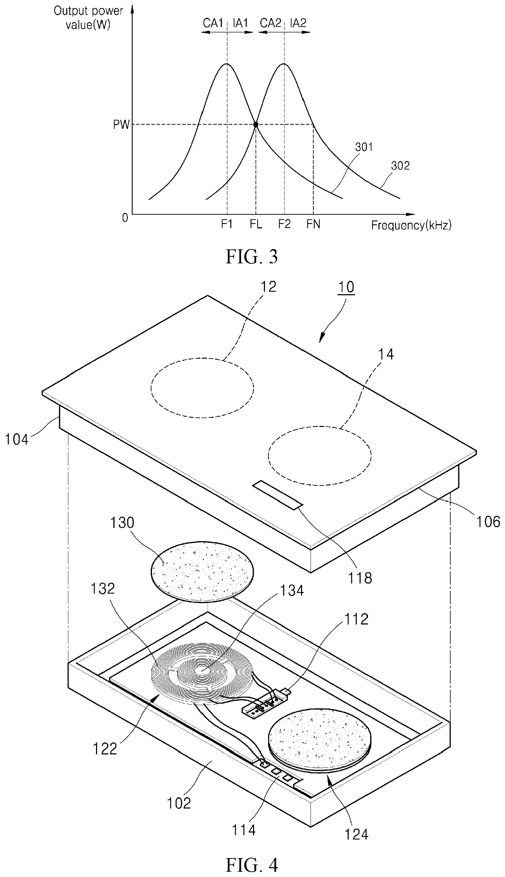

When the center point A1 of the working coil 32 completely matches the center point A2 of the container 34 as illustrated in FIG. 2, the heating performance of the working coil 32 is maximized. Thus, time taken to heat the container 34 is minimized. When the center point A1 of the working coil 32 matches the center point A2 of the container 34 as illustrated in FIG. 3, the container is in a state of being concentric.

FIG. 3 is a view showing frequency-output power value curves when a container is placed in a heating zone abnormally and normally.

In FIG. 3, a curve 301 shows output power values of the working coil 32, corresponding to driving frequencies of the working coil 32, when the container 34 is in the state of being eccentric as illustrated in FIG. 1. In FIG. 3, a curve 302 shows output power values of the working coil 32, corresponding to driving frequencies of the working coil 32, when the container 34 is in the state of being concentric as illustrated in FIG. 2. As illustrated in FIG. 3, a resonance frequency of the working coil 32 when the container 34 is in the state of being eccentric are less than a resonance frequency of the working coil 32 when the container 34 is in the state of being concentric.

In each of the frequency-output power value curves 301, 302 of FIG. 3, a left area, i.e., an area in which frequencies are less than the resonance frequencies F1, F2, is referred to as capacitive areas CA1, CA2, with respect to the resonance frequencies F1, F2, and a right area, i.e., an area in which frequencies are greater than the resonance frequencies F1, F2, is referred to as inductive areas IA1, IA2, with respect to the resonance frequencies F1, F2.

When a driving frequency of the working coil 32 is set to a frequency included in the inductive areas IA1, IA2 in a state in which the resonance frequencies F1, F2 of the working coil 32 are fixed, the induction heating apparatus operates normally.

When a driving frequency of the working coil 32 is set to a frequency included in the capacitive areas CA1, CA2 in a state in which the resonance frequencies F1, F2 of the working coil 32 are fixed, the induction heating apparatus operates abnormally. Specifically, when the working coil 32 operates in the capacitive areas CA1, CA2, zero voltage switching (ZVS) of switching elements included in an inverter circuit configured to supply current to the working coil 32 fails. Thus, switching loss among the switching elements increases, and power efficiency of the inverter circuit and the working coil 32 decrease. Further, as the switching loss among the switching elements increases due to the failure of ZVS, the switching elements may be damaged due to heat generation of the switching elements.

When the user inputs a power level and an instruction to initiate heating in the state in which the container 34 is in the state of being eccentric as illustrated in FIG. 1, a resonance frequency F1 of the working coil 32 is determined, and a driving frequency FL of the working coil 32 is determined based on an output power value corresponding to the power level input by the user. Accordingly, the working coil 32 may be driven at the driving frequency FL. In this case, since the driving frequency FL of the working coil 32 is greater than the resonance frequency F1, the induction heating apparatus operates in the inductive area IA1.

By the way, when the user moves the container 34 to a different position such that the container 34 is in the state of being concentric as illustrated in FIG. 2, while the working coil 32 operates at the driving frequency FL in the state in which the container 34 is in the state of being eccentric as illustrated in FIG. 1, the driving frequency FL of the working coil 32 remains the same, and the resonance frequency the working coil 32 changes from F1 to F2. As a result, the driving frequency FL of the working coil 32 becomes less than the resonance frequency F2, and the induction heating apparatus operates in the capacitive area CA2. Thus, as switching loss of the switching elements included in the inverter circuit increases, the switching elements can be burned out.

WO 2020 / 046 052 A1 describes an induction heating device including a first and second working coil. A driving start time of the first working coil and of the second working coil are determined based on a driving scheme of the first working coil. An eccentricity determination period of the first working coil and an eccentricity determination of the second working coil are determined based on the driving scheme of the first working coil, the driving scheme of the second working coil, the driving period, a duty cycle of the first working coil and a duty cycle of the second working coil.

### SUMMARY

The objective of the present disclosure is to provide an induction heating apparatus and a method for operating the same, which prevent a switching element from being burnt out.

It is an objective of the present disclosure to provide an induction heating apparatus and a method for operating the same, which adapt the driving frequencies, when moving the container during operation of the working coil.

This is in particular achieved by stopping operation of an induction heating apparatus when the induction heating apparatus is sensed operating abnormally due to a change in the position of a container during normal operation of the induction heating apparatus.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

The object is solved by the features of the independent claims. Preferred embodiments are given in the dependent claims.

In one aspect of the disclosure, an induction heating apparatus, is provided comprising: a working coil disposed in a position corresponding to a position of a heating zone; an inverter circuit comprising a plurality of switching elements and configured to supply current to the working coil; a driving circuit configured to supply a switching signal to each of the switching elements included in the inverter circuit; and a controller configured to determine a driving frequency of the working coil, corresponding to a power level of the heating zone, when the power level is input, supply a control signal based on the driving frequency to the driving circuit, and drive the working coil.

Preferably, the controller may measure a resonance current value of the working coil, may measure a driving voltage value supplied to a switching element included in the inverter circuit configured to supply current to the working coil.

The controller may measure a resonance current value of the working coil and measure a driving voltage value supplied to a switching element and may determine whether the induction heating apparatus is driven in abnormal or normal and may control driving of the working coil based on thereon.

Operating the induction heating apparatus with driving frequencies less than a resonance frequency may represent a capacitive area and operating the induction heating apparatus with driving frequencies greater than the resonance frequency may represent an inductive area.

The controller may determine or generate an overlapped period of the resonance current value and the driving voltage value, may compare a time point of appearance of the overlapped period with a predetermined reference time point to thereby determine a driving state of the induction heating apparatus, and may control driving of the working coil based on the driving state of the induction heating apparatus.

In one or more embodiments, the overlapped period may be a period for which the resonance current value and the driving voltage value are all positive numbers.

In one or more embodiments, the diving voltage value may be magnitude of voltage supplied between a second terminal and a third terminal of the switching element.

In one or more embodiments, the reference time point may be a middle time point of a period for which the resonance current value is positive numbers.

In one or more embodiments, when the time point at which the overlapped period appears is later than the reference time point, the controller may determine that the driving state of the induction heating apparatus is normal.

When the time point at which the overlapped period appears is earlier than the reference time point, the controller may determine that the driving state of the induction heating apparatus is abnormal.

In one or more embodiments, when determining that the driving state of the induction heating apparatus is normal, the controller may keep the working coil operating.

When determining that the driving state of the induction heating apparatus is abnormal, the controller may stop driving of the working coil.

In one or more embodiments, the controller may determine a re-driving frequency of the working coil, corresponding to the power level after the working coil stops operating, and may drive the working coil based on the re-driving frequency.

In another aspect a method for controlling an induction heating apparatus is provided, comprising: receiving an input power level of a heating zone; determining a driving frequency of a working coil, corresponding to the power level; driving the working coil based on the driving frequency; measuring a resonance current value of the working coil; measuring a driving voltage value supplied to a switching element included in an inverter circuit configured to supply current to the working coil; determine whether the driving state of the induction heating apparatus is normal or abnormal based on the measured resonance current value of the working coil and the measured a driving voltage.

The determining of the driving state may include determining an overlapped period of the resonance current value and the driving voltage value; comparing a time point at which the overlapped period appears with a predetermined reference time point to determine a driving state of the induction heating apparatus; and controlling driving of the working coil based on the driving state of the induction heating apparatus.

In one or more embodiments, determining a driving state of the induction heating apparatus may comprise: determining that the driving state of the induction heating apparatus is normal when the time point at which the overlapped period appears is later than the reference time point; and determining that the driving state of the induction heating apparatus is abnormal when the time point at which the overlapped period appears is earlier than the reference time point.

In one or more embodiments, controlling driving of the working coil, may comprise: keeping the working coil operating when determining that the driving state of the induction heating apparatus is normal; and stopping driving of the working coil when determining that the driving state of the induction heating apparatus is abnormal.

In one or more embodiments, controlling driving of the working coil, may further comprise: determining a re-driving frequency of the working coil, corresponding to the power level, after the working coil stops operating; and driving the working coil based on the re-driving frequency. A controller of an induction heating apparatus in one embodiment may generate an overlapped period of a resonance current value of a working coil, and a driving voltage value of a switching element included in an inverter circuit. In the present disclosure, the overlapped period may be a period for which the resonance current value and the driving voltage value are all positive numbers.

The controller may determine whether a driving state of the induction heating apparatus is abnormal, based on a time point of appearance of the overlapped period.

In the disclosure, the abnormal driving state of the induction heating apparatus denotes driving of the induction heating apparatus in a capacitive area. Additionally, in the disclosure, the normal driving state of the induction heating apparatus denotes driving of the induction heating apparatus in an inductive area.

When determining that the driving state of the induction heating apparatus is abnormal, the controller may stop the driving of the working coil. When the induction heating apparatus operates in the capacitive area, the switching element is likely to be burnt out. The driving of the working coil may be stopped to prevent the switching element from being burnt out.

The induction heating apparatus in one embodiment may include a working coil disposed in a position corresponding to a position of a heating zone, an inverter circuit including a plurality of switching elements and configured to supply current to the working coil, a driving circuit configured to supply a switching signal to each of the switching elements included in the inverter circuit, and a controller configured to determine a driving frequency of the working coil, corresponding to a power level of the heating zone, when the power level is input, supply a control signal based on the driving frequency to the driving circuit, and drive the working coil.

In one embodiment, the controller may measure a resonance current value of the working coil, measure a driving voltage value supplied to the switching element included in the inverter circuit configured to supply current to the working coil, generate an overlapped period of the resonance current and the driving voltage, compare a time point of appearance of the overlapped period with a predetermine reference time point to determine a driving state of the induction heating apparatus, and control driving of the working coil based on the driving state of the induction heating apparatus.

A method for controlling an induction heating apparatus in one embodiment may include receiving an input power level of a heating zone, determining a driving frequency of a working coil, corresponding to the power level, driving the working coil based on the driving frequency, measuring a resonance current value of the working coil, measuring a driving voltage value supplied to a switching element included in an inverter circuit configured to supply current to the working coil, generating an overlapped period of the resonance current and the driving voltage, comparing a time point of appearance of the overlapped period with a predetermined reference time point to determine a driving state of the induction heating apparatus, and controlling driving of the working coil based on the driving state of the induction heating apparatus.

In one embodiment, when an induction heating apparatus is sensed operate abnormally due to a change in the position of a container during normal operation of the induction heating apparatus, the induction heating apparatus stops operating. Thus, the burning out of switching elements are prevented, which would be caused when the induction heating apparatus continues to operate abnormally.

### BRIEF DESCRIPTION OF DRAWINGS

FIG. 1 is a view showing a state in which a container is abnormally placed in a heating zone formed on an upper plate of an induction heating apparatus;
FIG. 2 is a view showing a state in which a container is normally placed in a heating zone formed on an upper plate of an induction heating apparatus;
FIG. 3 is a view showing frequency-output power value curves when a container is placed in a heating zone abnormally and normally;
FIG. 4 exploded perspective view showing an induction heating apparatus in one embodiment;
FIG. 5 is a circuit diagram of the induction heating apparatus in one embodiment;
FIG. 6 is a view showing a waveform of resonance current of a working coil and a waveform of driving voltage of a switching element when an induction heating apparatus is driven in an inductive area;
FIG. 7 waveform of resonance current of a working coil and a waveform of driving voltage of a switching element when an induction heating apparatus is driven in a capacitive area;
FIG. 8 flow chart of a method for controlling an induction heating apparatus in one embodiment;
FIG.9 method flow chart for controlling an induction heating apparatus in another embodiment.

### DETAILED DESCRIPTION

The above-described aspects, features and advantages are specifically described hereunder with reference to the accompanying drawings such that one having ordinary skill in the art to which the present disclosure pertains can easily implement the technical idea of the disclosure. In the disclosure, detailed descriptions of known technologies in relation to the disclosure are omitted if they are deemed to make the gist of the disclosure unnecessarily vague. Below, preferred embodiments according to the disclosure are specifically described with reference to the accompanying drawings. In the drawings, identical reference numerals can denote identical or similar components.

FIG. 4 is an exploded perspective view showing an induction heating apparatus in one embodiment.

Referring to FIG.4, an induction heating apparatus 10 in one embodiment may include a case 102 constituting a main body, and a cover plate 104 coupled to the case 102 and sealing the case 102.

The cover plate 104 may be coupled to an upper surface of the case 102 and seal a space, formed inside the case 102, from the outside. The cover plate 104 may include an upper plate 106 on which a container for cooking a food item is placed. In one embodiment, the upper plate 106 may be made of tempered glass such as ceramic glass. However, a material for the upper plate 106 may vary depending on embodiments.

Heating zones 12, 14 respectively corresponding to working coil assemblies 122, 124 may be formed on the upper plate 106. For a user to recognize positions of the heating zones 12, 14 easily, lines or figures corresponding to the heating zones 12, 14 may be provided, printed or displayed on the upper plate 106.

The case 102 may be formed as a cuboid, an upper portion of which is open. The working coil assemblies 122, 124 for heating a container may be disposed in the space formed inside the case 102. Additionally, an interface 114 may be disposed inside the case 102. The interface 114 may allow the user to input a desired supply power or be used to adjust a power level of each of the heating zones 12, 14. The interface may further display information on the induction heating apparatus 10. However, such information may be also displayed at a different position. The interface 114 may be implemented as a touch panel that is capable of inputting based on a touch input at the touch panel and/or displaying information. However, an interface 114 having a different structure may be used depending on embodiments.

Additionally, on the upper plate 106, a manipulation zone 118 may be disposed in a position corresponding to a position of the interface 114. For the user's manipulation, characters or images and the like may be printed in the manipulation zone 118, in advance. The user may perform desired manipulation by touching a specific point of the manipulation zone 118 with reference to the characters or images that are printed in the manipulation zone 118 in advance. Additionally, information output by the interface 114 may be displayed through the manipulation zone 118.

The user may set a power level of one or more of the heating zones 12, 14 through the interface 114. The power level may be displayed in the manipulation zone 118 as numbers (e.g., 1, 2, 3, ..., 9). When a power level of the one or more of the heating zones 12, 14 is set, a required power value and a driving frequency of a working coil corresponding to the one or more of the heating zones 12, 14 may be determined. A controller may drive each working coil, based on the determined driving frequency, such that an actual output power value of the one or more working coils matches a required power value set by the user.

Further, a power supply 112 for supplying power to the working coil assemblies 122, 124 or the interface 114 may be disposed in the space formed inside the case 1.

In the embodiment of FIG. 4, two working coil assemblies, i.e., a first working coil assembly 122 and a second working coil assembly 124, are disposed inside the case 102, for example. However, three or more working coil assemblies may be disposed inside the case 102, depending on embodiments.

The working coil assemblies 122, 124 may include a working coil that forms an induced magnetic field using a high-frequency alternating current supplied by the power supply unit 112, and/or an insulating sheet for protecting a coil from heat generated by a working coil forming an induced magnetic field. In FIG. 4, the first working coil assembly 122 may include a first working coil 132 for heating a container placed in a first heating zone 12, and a first insulating sheet 130, for example. Additionally, though not illustrated, the second working coil assembly 124 may include a second working coil and a second insulating sheet. Depending on embodiments, the insulating sheet may not be provided.

Further, one or more of the working coils may be provided with one or more temperature sensors, preferably in a central portion thereof. In FIG. 4, a temperature sensor 134 may be disposed in a central portion of the first working coil 132, for example. The temperature sensor may measure a temperature of a container placed in the heating zones. In one embodiment, the temperature sensor may be a thermistor temperature sensor having a variable resistance whose resistance value changes according to the temperature of the container, but the type of the temperature sensor is not limited thereto.

In one embodiment, the temperature sensor may output a sensing voltage corresponding to a temperature of a container. The sensing voltage output from the temperature sensor may be delivered to the controller. The controller may determine the temperature of the container, based on magnitude of the sensing voltage output from the temperature sensor. When the temperature of the container is a predetermined reference value or greater, the controller may perform an overheat preventing operation by decreasing an actual power value of a working coil or stopping driving of a working coil.

Furthermore, though not illustrated in FIG. 4, a substrate may be disposed in the space formed inside the case 102, and a plurality of circuits or elements including the controller may be mounted onto the substrate. The controller may drive the one or more working coils according to the user's instruction to initiate heating, input through the interface 114, to perform a heating operation. When the user inputs an instruction to end heating through the interface 114, the controller may stop the driving of the working coils to end the heating operation.

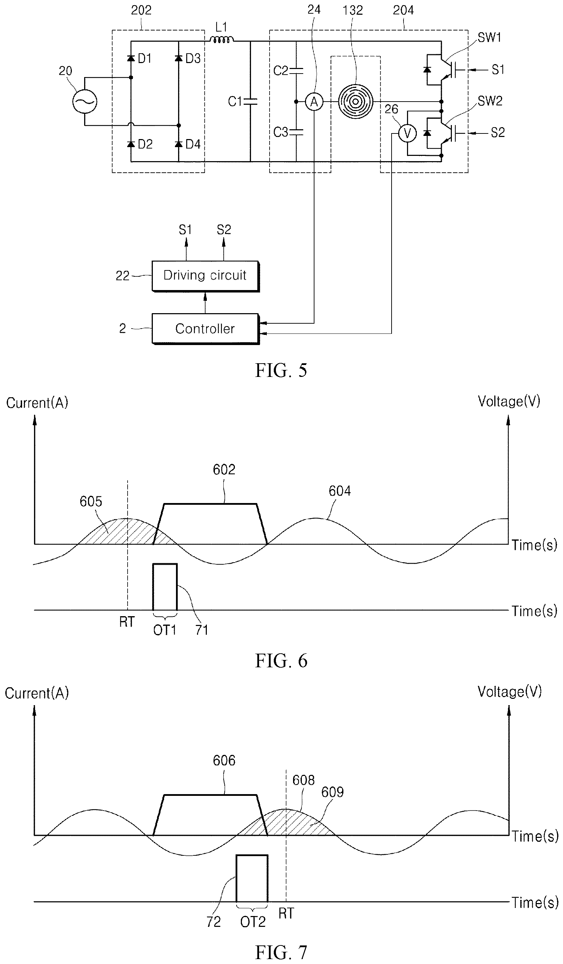

FIG. 5 is a circuit diagram of the induction heating apparatus in one embodiment.

Referring to FIG. 5, the induction heating apparatus 10 in one embodiment may include a rectifying circuit 202, smoothing circuits L1, C1, an inverter circuit 204, and a working coil 132.

The rectifying circuit 202 may include a plurality of diode elements D1, D2, D3, D4. The rectifying circuit 202 may be a bridge diode circuit, as illustrated in FIG.5, and may be another circuit depending on embodiments. The rectifying circuit 202 may rectify AC voltage supplied by a power supplying device 20 and output voltage having a pulse waveform.

The smoothing circuits L1, C1 may smooth the voltage rectified by the rectifying circuit 202 and output DC link voltage. The smoothing circuits L1, C1 may include a first inductor L1 and a DC link capacitor C 1.

The inverter circuit 204 may include a first switching element SW1, a second switching element SW2, a first capacitor C2, and a second capacitor C3.

As illustrated in FIG. 5, the inverter circuit 204 of the induction heating apparatus 10 in one embodiment may be implemented as a half-bridge circuit including two switching elements SW1, SW2. In another embodiment, the inverter circuit 204 may be implemented as a full-bridge circuit including four switching elements.

The first switching element SW1 and the second switching element SW2 may be respectively turned on and turned off by a first switching signal S 1 and a second switching signal S2. For example, each of the switching elements SW1, SW2 may be turned on when each of the switching signals S1, S2 is at a high level, and turned off when each of the switching signals S1, S2 is at a low level.

In FIG. 5, each of the switching elements SW1, SW2 is an IGBT element, for example. However, each of the switching elements SW1, SW2 may be another type of switching element (e.g., a BJT or an FET and the like), depending on embodiments.

The switching elements SW1, SW2 may be turned on and turned off complementarily. For example, in any operation mode, the second switching element SW2 may be turned off (turned on) while the first switching element SW1 is turned on (turned off).

DC link voltage input to the inverter circuit 204 may be converted into alternating voltage (alternating current) as a result of the turn-on and turn-off operations, i.e., a switching operation, of the switching elements SW1, SW2 included in the inverter circuit 204. The alternating current output from the inverter circuit 204 may be supplied to the working coil 132. When the alternating current is supplied by the inverter circuit 204, a resonance phenomenon may occur in the working coil 132, and thermal energy may be supplied to the container.

In the disclosure, each of the first switching element S1 and the second switching element S2 may output a pulse width modulation (PWM) signal having a predetermined duty cycle.

When the alternating current output from the inverter circuit 204 is supplied to the working coil 132, the working coil 132 may be driven. As a result of the driving of the working coil 132, a container placed over the working coil 132 may be heated while eddy current flows in the container. During the driving of the working coil 132, magnitude of thermal energy supplied to the container may vary depending on magnitude of power actually generated as a result of the driving of the working coil, i.e., an actual output power value of the working coil.

When the induction heating apparatus 10 is powered on as a result of manipulation of the interface of the induction heating apparatus 10 by the user, the induction heating apparatus may be put on standby for driving as power is supplied to the induction heating apparatus from an input power supply 20. Then the user may place a container over a working coil of the induction heating apparatus and set a power level for the container, to give the working coil an instruction to initiate heating. When the instruction to initiate heating is given by the user, a power value required for the working coil 132, i.e., a required power value of the working coil 132 may be determined based on the power level set by the user.

Having received the user's instruction to initiate heating, the controller 2 may determine a driving frequency, corresponding to the required power value of the working coil 132, and supply a control signal corresponding to the determined driving frequency to the driving circuit 22. Accordingly, the switching signals S1, S2 may be output from the driving circuit 22, and as the switching signals S1, S2 are respectively input to the switching elements SW1, SW2, the working coil 132 may be driven. As a result of the driving of the working coil 132, the container may be heated while eddy current flows in the container.

In one embodiment, the controller 2 may determine a driving frequency of the working coil 132 such that the driving frequency corresponds to a power level of a heating zone, set by the user. For example, when the user sets a power level of a heating zone, the controller 2 may set a driving frequency of the working coil 132 to a predetermined maximum frequency, and then gradually decrease the driving frequency of the working coil 132 until an output power value of the working coil 132 matches a required power value corresponding to the power level set by the user. The controller 2 may determine a frequency at a time when the output power value of the working coil 132 matches the required power value as the driving frequency of the working coil 132.

The controller 2 may supply a control signal corresponding to the determined driving frequency to the driving circuit 22. The driving circuit 22 may output switching signals S1, S2 that have a duty ratio corresponding to the driving frequency determined by the controller 2, based on the control signal output from the controller 2. As a result of input of the switching signals S1, S2 alternating current may be supplied to the working coil 132 while the switching elements SW1, SW2 are turned on and turned off complementarily.

When the container is heated as a result of the driving of the working coil 132, the controller 2 may obtain magnitude of resonance current, i.e., a resonance current value, of the working coil 132, measured through a current sensor 24.

Further, the controller 2 may obtain magnitude of voltage, which is supplied to the switching elements SW1, SW2, and measured through a voltage sensor 26 when the switching elements SW1, SW2 are turned on and turned off complementarily, SW2, i.e., a driving voltage value that is magnitude of driving voltage of the switching elements SW1, SW2. For example, when the switching elements SW1, SW2 are an IGBT element, a driving voltage value of the switching elements SW1, SW2 may be the magnitude of voltage between a second terminal (a collector terminal) and a third terminal (an emitter terminal), among a first terminal (a base terminal), the second terminal (a collector terminal) and the third terminal (an emitter terminal) included in the IGBT element, i.e., magnitude of collector-emitter voltage V_{CE}.

FIG. 5 shows an embodiment in which the voltage sensor 26 measures a driving voltage value of the switching element SW2. However, a driving voltage value of the switching element SW1 may be also or alternatively measured depending on the application.

In one embodiment, the controller 2 may compare the resonance current value obtained through the current sensor 24 with the driving voltage value of the switching element obtained through the voltage sensor 26, and may generate an overlapped period.

FIG. 6 is a view showing a waveform of resonance current of a working coil and a waveform of driving voltage of a switching element when an induction heating apparatus is driven in an inductive area, and FIG. 7 is a view showing a waveform of resonance current of a working coil and a waveform of driving voltage of a switching element when an induction heating apparatus is driven in a capacitive area.

In one embodiment, when the container is heated as a result of the driving of the working coil1 132, the controller 2 may respectively obtain a resonance current value 604, 608 of the working coil 132 and a driving voltage value 602, 606 of the switching element SW2, as illustrated in FIGS. 6 and 7.

The controller 2 may compare the obtained resonance current value 604, 608 of the working coil 132 with the obtained driving voltage value 602, 606 of the switching element SW2, and may derive or generate a period for which the resonance current value 604, 608 of the working coil 132 and the driving voltage value 602, 606 of the switching element SW2 are all positive numbers, i.e., an overlapped period. In FIGS. 6 and 7, the overlapped periods 71, 72 that are the periods, for which the resonance current value 604, 608 of the working coil 132 and the driving voltage value 602, 606 of the switching element SW2 are all positive numbers, are illustrated respectively.

After determining the overlapped periods 71, 72, i.e. when the overlapped periods 71, 72 are obtained, the controller 2 may compare a time point OT1 at which the overlapped periods 71, 72 appear or starts with a predetermined reference time point RT.

In the disclosure, the reference time point RT may be defined as a middle time point of the period for which the resonance current value of the working coil is positive numbers. For example, in FIG. 6, a middle time point RT of the period 605 for which the resonance current value 604 of the working coil 132 is positive numbers may be a reference time point. Likewise, in FIG. 7, a middle time point RT of the period 609 for which the resonance current value 608 of the working coil 132 is positive numbers may be a reference time point.

As illustrated in FIG. 6, when the induction heating apparatus is driven in the inductive area, i.e., when the induction heating apparatus is driven normally, a time point OT1 at which the overlapped period 71 appears may be later than the reference time point, i.e., the middle time point RT. When the container is not moved in a state of being eccentric (see FIG. 1) or in a state of being concentric (see FIG. 2) and the working coil 132 is driven, the induction heating apparatus may be driven in the inductive area.

When the induction heating apparatus is driven in the capacitive area as illustrated in FIG. 7, i.e., when the induction heating apparatus is driven abnormally, a time point OT2 at which the overlapped period 72 appears may be earlier than the reference time point RT, i.e., the middle time point RT. When the container is in a state of being eccentric (see FIG. 1) and is then moved into a state of being concentric (see FIG. 2) during the driving of the working coil 132, as described above, the induction heating apparatus may be driven in the capacitive area.

Accordingly, the controller 2 may compare the time point OT at which the overlapped period, generated during the driving of the working coil 132, appears with the reference time point RT, to determine a driving state of the induction heating apparatus.

In one embodiment, when the time point OT at which the overlapped period appears is later than the reference time point RT, the controller 2 may determine that the driving state of the induction heating apparatus is normal, and when the time point OT at which the overlapped period appears is earlier than the reference time point RT, determine that the driving state of the induction heating apparatus is abnormal.

The controller 2 may determine whether the working coil 132 is driven, based on the overlapped period OT1 and the driving state of the induction heating apparatus. For example, when determining that the driving state of the induction heating apparatus is normal, the controller 2 may keep the working coil 132 operating.

However, when determining that the driving state of the induction heating apparatus is abnormal, the controller 2 may stop the driving of the working coil 132. Thus, the switching elements SW1, SW2 included in the inverter circuit 204 may be prevented from being burnt out.

In one embodiment, after the working coil 132 stops operating since the controller 2 determines that the driving state of the induction heating apparatus is abnormal, the controller 2 may calculate a driving frequency for driving the working coil 132 again, i.e., a re-driving frequency, based on a required power value set by the user.

For example, as illustrated in FIG. 3, after the working coil 132 stops operating since the controller determines that the driving state of the induction heating apparatus is abnormal while the working coil 132 is being driven at a driving frequency FL, the controller 2 may calculate a re-driving frequency FN of the working coil 132, corresponding to the required power value PW. The controller 2 may drive the working coil 132 again, based on the re-driving frequency FN, such that the working coil 132 starts to heat the container again. Since the re-driving frequency FN of the working coil 132 is greater than a resonance frequency F2 as illustrated in FIG. 3, the induction heating apparatus may be driven reliably in the inductive area.

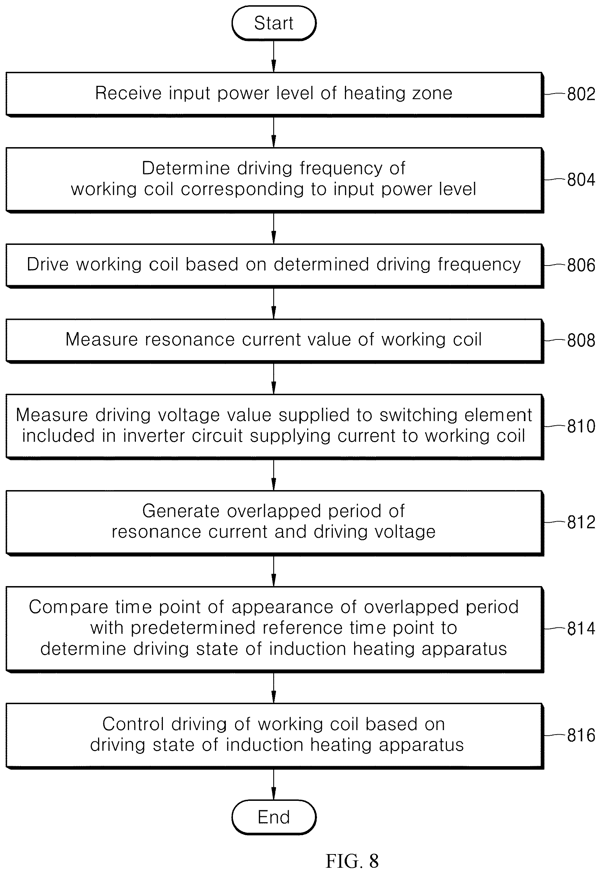

FIG. 8 is a flow chart showing a method for controlling an induction heating apparatus in one embodiment.

Referring to FIG. 8, a controller 2 may receive an input power level of a heating zone 802. The controller 2 may determine a driving frequency of a working coil 132, corresponding to the input power level 804.

When the driving frequency of the working coil 132 is determined, the controller 2 may supply a control signal to a driving circuit 22 to drive the working coil 132 based on the driving frequency 806.

While the working coil 132 is being driven, the controller 2 may measure a resonance current value of the working coil 132 808. Further, while the working coil 132 is being driven, the controller 2 may measure 810 a driving voltage value supplied to a switching element e.g., SW2 included in an inverter circuit 204 configured to supply current to the working coil 132.

The controller 2 may determine or generate an overlapped period OT of the resonance current value and the driving voltage value 812.

The controller 2 may compare a time point at which the overlapped period OT appears with a predetermined reference time point RT to thereby determine a driving state of the induction heating apparatus 814.

In one embodiment, when the time point at which the overlapped period OT appears is later than the reference time point RT, the controller 2 may determine the driving state of the induction heating apparatus is normal. Then no change in driving the induction heating apparatus is made.

However, when the time point at which the overlapped period OT appears is earlier than the reference time point RT, the driving state of the induction heating apparatus is determined as being abnormal.

The controller 2 may control the driving of the working coil, based on the determined driving state of the induction heating apparatus 816.

In one embodiment, when determining that the driving state of the induction heating apparatus is normal, the controller 2 may keep the working coil 132 operating.

When determining that the driving state of the induction heating apparatus is abnormal, the controller 2 may stop the driving of the working coil 132.

Though not illustrated, the method for controlling an induction heating apparatus in one embodiment may further include determining a re-driving frequency of the working coil 132, corresponding to the power level, after stopping the driving of the working coil 132, and driving the working coil 132 at the re-driving frequency.

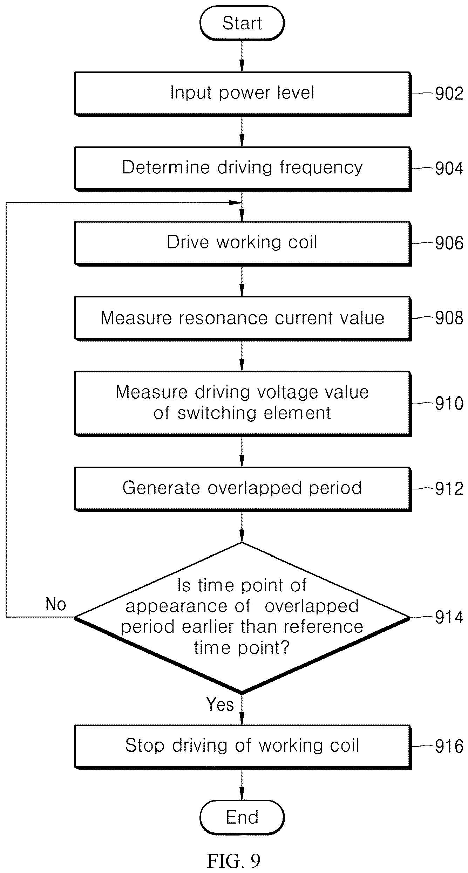

FIG. 9 is a flow chart showing a method for controlling an induction heating apparatus in another embodiment.

When a user places a container in a heating zone and inputs a power level 902, a controller 2 may determine a driving frequency of a working coil 132, corresponding to the power level 904.

When the driving frequency is determined, the controller 2 may supply a control signal corresponding to the driving frequency to a driving circuit 22. Accordingly, the working coil 132 may be driven at the driving frequency 906.

When the working coil 132 is driven at the driving frequency, the controller 2 may obtain 908 a resonance current value of the working coil 132 measured through a current sensor 24. Further, the controller 2 may obtain a driving voltage value of a switching element SW2, measured through a voltage sensor 26 when the working coil 132 is driven 910.

The controller 2 may determine or generate 912 an overlapped period OT of resonance current value of the working coil 132 and the driving voltage value of the switching element SW2.

The controller 2 may compare 914 a time point at which the overlapped period OT generated appears with a predetermined reference time point RT.

When the time point at which the overlapped period OT appears is later than the reference time point RT as a result of the comparison in step 914, it means that the induction heating apparatus is driven in an inductive area. Accordingly, the controller 2 may determine that a driving state of the induction heating apparatus is normal.

When determining that the driving state of the induction heating apparatus is normal, the controller 2 may perform step 906 to step 914 again.

When the time point at which the overlapped period OT appears is earlier than the reference time point RT as a result of the comparison in step 914, it means that the induction heating apparatus is driven in a capacitive area. Accordingly, the controller 2 may determine that the driving state of the induction heating apparatus is abnormal.

When determining that the driving state of the induction heating apparatus is abnormal, the controller 2 may stop the driving of the working coil 132 (916). Thus, the switching elements SW1, SW2 may be prevented from being burnt out.

Though not illustrated, the controller 2 may determine a re-driving frequency of the working coil 132, corresponding to a required power value, after stopping the driving of the working coil 132 in step 916, and driving the working coil 132 at the re-driving frequency. Thus, even after the user moves the container, the switching elements SW1, SW2 may be prevented from being burnt out, and an operation of heating the container may continue.

## Claims

1. An induction heating apparatus (10), comprising:
a working coil (132) disposed in a position corresponding to a position of a heating zone (12, 14);
an inverter circuit (204) comprising a plurality of switching elements (SW1, SW2) and configured to supply current to the working coil (132);
a driving circuit (22) configured to supply a switching signal (S1, S2) to each of the switching elements (SW1, SW2) included in the inverter circuit (204); and
a controller (2) configured:
to determine a driving frequency of the working coil (132), corresponding to a power level of the heating zone (12, 14), when the power level is input,
to supply a control signal based on the driving frequency to the driving circuit (22) for driving the working coil (132) correspondingly,
**characterised in that** the controller (2) is configured to measure a resonance current value of the working coil (132) and to measure a driving voltage value supplied to a switching element (SW1, SW2) and to determine whether the induction heating apparatus (10) is driven in abnormal or normal and to controls driving of the working coil (132) based on thereon.

2. The induction heating apparatus of claim 1, wherein the controller (2) is configured to determine an abnormal driving state, when the induction heating apparatus (10) is driven in a capacitive area and to determine a normal driving state when the induction heating apparatus (10) is driven in an inductive area

3. The induction heating apparatus of claim 2, wherein operating the induction heating apparatus (10) with driving frequencies less than a resonance frequency (F1, F2) represents a capacitive area (CA1, CA2) and driving frequencies greater than the resonance frequency (F1, F2) represents an inductive area (IA1, IA2).

4. The induction heating apparatus of claim 1, 2 or 3, wherein for determining the driving state the controller (2) is configured to determine an overlapped period (OT) of the resonance current value and the driving voltage value, and to compare a time point of appearance of the overlapped period (OT) with a predetermined reference time point (RT) to determine whether the induction heating apparatus (10) is driven abnormally or normally, preferably abnormally driven is a driving state in a capacitive area and normally driven is a driving state in an inductive area.

5. The induction heating apparatus of claim 4, wherein the overlapped period (OT) is a period for which the resonance current value and the driving voltage value are all positive numbers and/or the driving voltage value is a magnitude of voltage supplied between a second terminal and a third terminal of the switching element (SW1, SW2); and/or the reference time point (RT) is a middle time point of a period for which the resonance current value is positive numbers.

6. The induction heating apparatus of claim 4 or 5, wherein when the time point at which the overlapped period (OT) appears is later than the reference time point (RT), the controller (2) is configured to determine that the driving state of the induction heating apparatus (10) is normal, and when the time point at which the overlapped period (OT) appears is earlier than the reference time point (RT), the controller (2) is configured to determine that the driving state of the induction heating apparatus (10) is abnormal.

7. The induction heating apparatus (10) of any one of the preceding claims, wherein when determining that the driving state of the induction heating apparatus (10) is normal, the controller (2) is configured to keep the working coil (132) operating, and when determining that the driving state of the induction heating apparatus (10) is abnormal, the controller (2) is configured to stop driving of the working coil (132).

8. The induction heating apparatus of claim 6, wherein the controller (2) is configured to determine a re-driving frequency of the working coil (132), corresponding to the power level after operating of the working coil (132) has been stopped, and to drive the working coil (132) based on the re-driving frequency.

9. A method for controlling an induction heating apparatus (10), comprising:
receiving (802) an input power level of a heating zone (12, 14);
determining (804) a driving frequency of a working coil (132), corresponding to the power level;
driving (806) the working coil (132) based on the driving frequency;
and **characterised by**
measuring (808) a resonance current value of the working coil (132);
measuring (810) a driving voltage value supplied to a switching element (SW1, SW2) included in an inverter circuit (204) configured to supply current to the working coil (132);
determine (812, 814) whether a driving state of the induction heating apparatus (10) is driven abnormal or normal;
controlling (816) driving of the working coil (132) based on the driving state of the induction heating apparatus (10).

10. The method of claim 9, wherein determining (812, 814) whether a driving state of the induction heating apparatus (10) is driven abnormal or normal, comprises:
determining whether the induction heating apparatus (10) is driven in a capacitive area, which is determined as abnormally driving state
and whether the induction heating apparatus (10) is driven in an inductive area, which is to determined a normal driving state.

11. The method of claim 9 or 10, determining (812, 814) whether a driving state of the induction heating apparatus (10) is driven abnormal or normal, comprises:
determining (812) an overlapped period (OT) of the resonance current value and the driving voltage value;
comparing (814) a time point at which the overlapped period (OT) appears with a predetermined reference time point (RT) to determine a driving state of the induction heating apparatus (10).

12. The method of any one of claims 9, 10 or 11, wherein determining a driving state of the induction heating apparatus, comprising:
determining that the driving state of the induction heating apparatus (10) is normal when the time point at which the overlapped period (OT) appears is later than the reference time point (RT); and
determining that the driving state of the induction heating apparatus (10) is abnormal when the time point at which the overlapped period (OT) appears is earlier than the reference time point (RT).

13. The method of any one of claims 9 - 12, wherein controlling the driving of the working coil (132) comprising:
keeping the working coil (132) operating when determining that the driving state of the induction heating apparatus (10) is normal; and
stopping (916) driving of the working coil (132) when determining that the driving state of the induction heating apparatus (10) is abnormal.

14. The method of claim 13, wherein controlling the driving of the working coil (132) further comprising:
determining a re-driving frequency of the working coil, corresponding to the power level, after the working coil stops operating; and
driving the working coil based on the re-driving frequency.

## Patentansprüche

1. Induktionsheizvorrichtung (10), die umfasst:
eine Arbeitsspirale (132), die an einer Position angeordnet ist, die einer Position einer Heizzone (12, 14) entspricht;
eine Wechselrichterschaltung (204), die mehrere Schaltelemente (SW1, SW2) umfasst und dafür konfiguriert ist, der Arbeitsspirale (132) Strom zuzuführen;
eine Ansteuerschaltung (22), die dafür konfiguriert ist, jedem der in der Wechselrichterschaltung (204) enthaltenen Schaltelemente (SW1, SW2) ein Schaltsignal (S1, S2) zuzuführen; und
einen Controller (2), der konfiguriert ist zum:
Bestimmen einer Ansteuerfrequenz der Arbeitsspirale (132), die einem Leistungspegel der Heizzone (12, 14) entspricht, wenn der Leistungspegel eingegeben wird, und
Zuführen eines Steuersignals zu der Ansteuerschaltung (22) auf der Grundlage der Ansteuerfrequenz, um die Arbeitsspirale (132) dementsprechend anzusteuern, **dadurch gekennzeichnet, dass**
der Controller (2) dafür konfiguriert ist, einen Resonanzstromwert der Arbeitsspirale (132) zu messen und einen einem Schaltelement (SW1, SW2) zugeführten Ansteuerspannungswert zu messen und zu bestimmen, ob die Induktionsheizvorrichtung (10) anomal oder normal angesteuert wird, und das Ansteuern der Arbeitsspirale (132) auf dieser Grundlage zu steuern.

2. Induktionsheizvorrichtung nach Anspruch 1, wobei der Controller (2) dafür konfiguriert ist, einen anomalen Ansteuerzustand zu bestimmen, wenn die Induktionsheizvorrichtung (10) in einem kapazitiven Bereich angesteuert wird, und einen normalen Ansteuerzustand zu bestimmen, wenn die Induktionsheizvorrichtung (10) in einem induktiven Bereich angesteuert wird.

3. Induktionsheizvorrichtung nach Anspruch 2, wobei das Betreiben der Induktionsheizvorrichtung (10) mit Ansteuerfrequenzen kleiner als eine Resonanzfrequenz (F1, F2) einen kapazitiven Bereich (CA1, CA2) repräsentiert und mit Ansteuerfrequenzen größer als die Resonanzfrequenz (F1, F2) einen induktiven Bereich (IA1, IA2) repräsentiert.

4. Induktionsheizvorrichtung nach Anspruch 1, 2 oder 3, wobei der Controller (2) zum Bestimmen des Ansteuerzustands dafür konfiguriert ist, eine überlappte Zeitdauer (OT) des Resonanzstromwerts und des Ansteuerspannungswerts zu bestimmen und einen Zeitpunkt des Erscheinens der überlappten Zeitdauer (OT) mit einem vorgegebenen Referenzzeitpunkt (RT) zu vergleichen, um zu bestimmen, ob die Induktionsheizvorrichtung (10) anomal oder normal angesteuert wird, wobei vorzugsweise ein Ansteuerzustand in einem kapazitiven Bereich anomal angesteuert ist und ein Ansteuerzustand in einem induktiven Bereich normal angesteuert ist.

5. Induktionsheizvorrichtung nach Anspruch 4, wobei die überlappte Zeitdauer (OT) eine Zeitdauer ist, für die der Resonanzstromwert und der Ansteuerspannungswert positive Zahlen sind und/oder der Ansteuerspannungswert ein Wert der Spannung ist, die zwischen einem zweiten Anschluss und einem dritten Anschluss des Schaltelements (SW1, SW2) zugeführt wird; und/oder wobei der Referenzzeitpunkt (RT) ein mittlerer Zeitpunkt einer Zeitdauer ist, für die der Resonanzstromwert eine positive Zahl ist.

6. Induktionsheizvorrichtung nach Anspruch 4 oder 5, wobei der Controller (2) dafür konfiguriert ist zu bestimmen, dass der Ansteuerzustand der Induktionsheizvorrichtung (10) normal ist, wenn der Zeitpunkt, zu dem die überlappte Zeitdauer (OT) erscheint, später als der Referenzzeitpunkt (RT) ist, und der Controller (2) dafür konfiguriert ist zu bestimmen, dass der Ansteuerzustand der Induktionsheizvorrichtung (10) anomal ist, wenn der Zeitpunkt, zu dem die überlappte Zeitdauer (OT) erscheint, früher als der Referenzzeitpunkt (RT) ist.

7. Induktionsheizvorrichtung (10) nach einem der vorhergehenden Ansprüche, wobei der Controller (2) dafür konfiguriert ist, die Arbeitsspirale (132) in Betrieb zu halten, wenn bestimmt wird, dass der Ansteuerzustand der Induktionsheizvorrichtung (10) normal ist, und der Controller (2) dafür konfiguriert ist, das Ansteuern der Arbeitsspirale (132) anzuhalten, wenn bestimmt wird, dass der Ansteuerzustand der Induktionsheizvorrichtung (10) anomal ist.

8. Induktionsheizvorrichtung nach Anspruch 6, wobei der Controller (2) dafür konfiguriert ist, eine Wiederansteuerfrequenz der Arbeitsspirale (132) zu bestimmen, die dem Leistungspegel entspricht, nachdem der Betrieb der Arbeitsspirale (132) angehalten worden ist, und die Arbeitsspirale (132) auf der Grundlage der Wiederansteuerfrequenz anzusteuern.

9. Verfahren zum Steuern einer Induktionsheizvorrichtung (10), wobei das Verfahren umfasst:
Empfangen (802) eines Eingangsleistungspegels einer Heizzone (12, 14);
Bestimmen (804) einer Ansteuerfrequenz einer Arbeitsspirale (132), die dem Leistungspegel entspricht;
Ansteuern (806) der Arbeitsspirale (132) auf der Grundlage der Ansteuerfrequenz;
und **gekennzeichnet durch**
Messen (808) eines Resonanzstromwerts der Arbeitsspirale (132);
Messen (810) eines Ansteuerspannungswerts, der einem Schaltelement (SW1, SW2) zugeführt wird, das in einer zum Zuführen von Strom zu der Arbeitsspirale (132) konfigurierten Wechselrichterschaltung (204) enthalten ist;
Bestimmen (812, 814), ob ein Ansteuerzustand der Induktionsheizvorrichtung (10) anomal oder normal angesteuert ist;
Steuern (816) des Ansteuerns der Arbeitsspirale (132) auf der Grundlage des Ansteuerzustands der Induktionsheizvorrichtung (10).

10. Verfahren nach Anspruch 9, wobei das Bestimmen (812, 814), ob ein Ansteuerzustand der Induktionsheizvorrichtung (10) anomal oder normal angesteuert ist, umfasst:
Bestimmen, ob die Induktionsheizvorrichtung (10) in einem kapazitiven Bereich angesteuert wird, der als anomaler Ansteuerzustand bestimmt wird,
und ob die Induktionsheizvorrichtung (10) in einem induktiven Bereich angesteuert wird, der als ein normaler Ansteuerzustand bestimmt werden soll.

11. Verfahren nach Anspruch 9 oder 10, wobei das Bestimmen (812, 814), ob ein Ansteuerzustand der Induktionsheizvorrichtung (10) anomal oder normal angesteuert ist, umfasst:
Bestimmen (812) einer überlappen Zeitdauer (OT) des Resonanzstromwerts und des Ansteuerspannungswerts;
Vergleichen (814) eines Zeitpunkts, zu dem die überlappte Zeitdauer (OT) erscheint, mit einem vorgegebenen Referenzzeitpunkt (RT), um einen Ansteuerzustand der Induktionsheizvorrichtung (10) zu bestimmen.

12. Verfahren nach einem der Ansprüche 9, 10 oder 11, wobei das Bestimmen eines Ansteuerzustands der Induktionsheizvorrichtung umfasst:
Bestimmen, dass der Ansteuerzustand der Induktionsheizvorrichtung (10) normal ist, wenn der Zeitpunkt, zu dem die überlappte Zeitdauer (OT) erscheint, später als der Referenzzeitpunkt (RT) ist; und
Bestimmen, dass der Ansteuerzustand der Induktionsheizvorrichtung (10) anomal ist, wenn der Zeitpunkt, zu dem die überlappte Zeitdauer (OT) erscheint, früher als der Referenzzeitpunkt (RT) ist.

13. Verfahren nach einem der Ansprüche 9-12, wobei das Steuern des Ansteuerns der Arbeitsspirale (132) umfasst:
In-Betrieb-Halten der Arbeitsspirale (132), wenn bestimmt wird, dass der Ansteuerzustand der Induktionsheizvorrichtung (10) normal ist; und
Anhalten (916) des Ansteuerns der Arbeitsspirale (132), wenn bestimmt wird, dass der Ansteuerzustand der Induktionsheizvorrichtung (10) anomal ist.

14. Verfahren nach Anspruch 13, wobei das Steuern des Ansteuerns der Arbeitsspirale (132) ferner umfasst:
Bestimmen einer Wiederansteuerfrequenz der Arbeitsspirale, die dem Leistungspegel entspricht, nachdem die Arbeitsspirale zu arbeiten aufgehört hat; und
Ansteuern der Arbeitsspirale auf der Grundlage der Wiederansteuerfrequenz.

## Revendications

1. Appareil de chauffage par induction (10), comprenant :
une bobine fonctionnelle (132) disposée en une position correspondant à une position d'une zone de chauffage (12, 14) ;
un circuit inverseur (204) comprenant une pluralité d'éléments de commutation (SW1, SW2) et configuré pour fournir du courant à la bobine fonctionnelle (132) ;
un circuit d'excitation (22) configuré pour fournir un signal de commutation (S 1, S2) à chacun des éléments de commutation (SW1, SW2) inclus dans le circuit inverseur (204) ; et
un module de commande (2) configuré :
pour déterminer une fréquence d'excitation de la bobine fonctionnelle (132), correspondant à un niveau de puissance de la zone de chauffage (12, 14), lorsque le niveau de puissance est entré,
pour fournir un signal de commande basé sur la fréquence d'excitation au circuit d'excitation (22) pour exciter de façon correspondante la bobine fonctionnelle (132),
**caractérisé en ce que** le module de commande (2) est configuré pour mesurer une valeur de courant de résonance de la bobine fonctionnelle (132) et pour mesurer une valeur de tension d'excitation fournie à un élément de commutation (SW1, SW2) et pour déterminer si l'appareil de chauffage par induction (10) est piloté en mode anormal ou normal et pour commander sur cette base l'excitation de la bobine fonctionnelle (132).

2. Appareil de chauffage par induction selon la revendication 1, dans lequel le module de commande (2) est configuré pour déterminer un état de pilotage anormal lorsque l'appareil de chauffage par induction (10) est piloté dans une zone capacitive et pour déterminer un état de pilotage normal lorsque l'appareil de chauffage par induction (10) est piloté dans une zone inductive.

3. Appareil de chauffage par induction selon la revendication 2, dans lequel le fait de faire fonctionner l'appareil de chauffage par induction (10) à des fréquences d'excitation inférieures à une fréquence de résonance (F1, F2) représente une zone capacitive (CA1, CA2) et à des fréquences d'excitation supérieures à la fréquence de résonance (F1, F2) représente une zone inductive (IA1, IA2).

4. Appareil de chauffage par induction selon la revendication 1, 2 ou 3, dans lequel pour déterminer l'état de pilotage le module de commande (2) est configuré pour déterminer une période de chevauchement (OT) de la valeur du courant de résonance et de la valeur de la tension d'excitation, et pour comparer un point temporel d'apparition de la période de chevauchement (OT) à un point temporel de référence (RT) préétabli, afin de déterminer si l'appareil de chauffage par induction (10) est piloté anormalement ou normalement, de préférence piloté anormalement est un état de pilotage dans une zone capacitive et piloté normalement est un état de pilotage dans une zone inductive.

5. Appareil de chauffage par induction selon la revendication 4, dans lequel la période de chevauchement (OT) est une période pour laquelle la valeur du courant de résonance et la valeur de la tension d'excitation sont toutes des nombres positifs et/ou la valeur de la tension d'excitation est une grandeur de tension fournie entre un deuxième terminal et un troisième terminal de l'élément de commutation (SW1, SW2) ; et/ou le point temporel de référence (RT) est un point temporel médian d'une période pour laquelle la valeur du courant de résonance est un nombre positif.

6. Appareil de chauffage par induction selon la revendication 4 ou 5, dans lequel lorsque le point temporel auquel apparaît la période de chevauchement (OT) se trouve plus tard que le point temporel de référence (RT), le module de commande (2) est configuré pour déterminer que l'état de pilotage de l'appareil de chauffage par induction (10) est normal, et lorsque le point temporel auquel apparaît la période de chevauchement (OT) se trouve plus tôt que le point temporel de référence (RT), le module de commande (2) est configuré pour déterminer que l'état de pilotage de l'appareil de chauffage par induction (10) est anormal.

7. Appareil de chauffage par induction (10) selon l'une quelconque des revendications précédentes, dans lequel lorsqu'il détermine que l'état de pilotage de l'appareil de chauffage par induction (10) est normal, le module de commande (2) est configuré pour maintenir en fonction la bobine fonctionnelle (132), et lorsqu'il détermine que l'état de pilotage de l'appareil de chauffage par induction (10) est anormal, le module de commande (2) est configuré pour arrêter l'excitation de la bobine fonctionnelle (132).

8. Appareil de chauffage par induction selon la revendication 6, dans lequel le module de commande (2) est configuré pour déterminer une fréquence de ré-excitation de la bobine fonctionnelle (132), correspondant au niveau de puissance, après que le fonctionnement de la bobine fonctionnelle (132) a été arrêté, et pour exciter la bobine fonctionnelle (132) sur la base de la fréquence de ré-excitation.

9. Procédé pour commander un appareil de chauffage par induction (10), comprenant :
recevoir (802) un niveau de puissance d'entrée d'une zone de chauffage (12, 14) ;
déterminer (804) une fréquence d'excitation d'une bobine fonctionnelle (132), correspondant au niveau de puissance ;
exciter (806) la bobine fonctionnelle (132) sur la base de la fréquence d'excitation ;
et **caractérisé par**
mesurer (808) une valeur du courant de résonance de la bobine fonctionnelle (132) ;
mesurer (810) une valeur de la tension d'excitation fournie à un élément de commutation (SW1, SW2) inclus dans un circuit inverseur (204) configuré pour fournir du courant à la bobine fonctionnelle (132) ;
déterminer (812, 814) si un état de pilotage de l'appareil de chauffage par induction (10) est piloté en mode anormal ou normal ;
commander (816) l'excitation de la bobine fonctionnelle (132) sur la base de l'état de pilotage de l'appareil de chauffage par induction (10).

10. Procédé selon la revendication 9, dans lequel déterminer (812, 814) si un état de pilotage de l'appareil de chauffage par induction (10) est piloté en mode anormal ou normal comprend :
déterminer si l'appareil de chauffage par induction (10) est piloté dans une zone capacitive, ce qui est déterminé comme un état de pilotage en mode anormal
et si l'appareil de chauffage par induction (10) est piloté dans une zone inductive, ce qui est déterminé comme un état de pilotage normal.

11. Procédé selon la revendication 9 ou 10, dans lequel déterminer (812, 814) si un état de pilotage de l'appareil de chauffage par induction (10) est piloté en mode anormal ou normal comprend :
déterminer (812) une période de chevauchement (OT) de la valeur du courant de résonance et de la valeur de la tension d'excitation ;
comparer (814) un point temporel auquel apparaît la période de chevauchement (OT) à un point temporel de référence (RT) préétabli, afin de déterminer un état de pilotage de l'appareil de chauffage par induction (10).

12. Procédé selon l'une quelconque des revendications 9, 10 ou 11, dans lequel déterminer un état de pilotage de l'appareil de chauffage par induction, comprend :
déterminer que l'état de pilotage de l'appareil de chauffage par induction (10) est normal lorsque le point temporel auquel apparaît la période de chevauchement (OT) se trouve plus tard que le point temporel de référence (RT) ; et
déterminer que l'état de pilotage de l'appareil de chauffage par induction (10) est anormal lorsque le point temporel auquel apparaît la période de chevauchement (OT) se trouve plus tôt que le point temporel de référence (RT).

13. Procédé selon l'une quelconque des revendications 9 - 12, dans lequel commander l'excitation de la bobine fonctionnelle (132) comprend :
maintenir en fonction la bobine fonctionnelle (132) lorsqu'il est déterminé que l'état de pilotage de l'appareil de chauffage par induction (10) est normal ; et
arrêter (916) l'excitation de la bobine fonctionnelle (132) lorsqu'il est déterminé que l'état de pilotage de l'appareil de chauffage par induction (10) est anormal.

14. Procédé selon la revendication 13, dans lequel commander l'excitation de la bobine fonctionnelle (132) comprend en outre :
déterminer une fréquence de ré-excitation de la bobine fonctionnelle, correspondant au niveau de puissance, après que la bobine fonctionnelle a arrêté de fonctionner ; et
exciter la bobine fonctionnelle sur la base de la fréquence de ré-excitation.
